# EUROPÄISCHE PATENTSCHRIFT

(11) **EP 2 160 033 B1**
(45) Veröffentlichungstag und Bekanntmachung des Hinweises auf die Patenterteilung: **02.09.2015**
(21) Anmeldenummer: 09008789.1
(22) Anmeldetag: 04.07.2009
(51) Int. Cl.: H04N 7/18, G06K 9/20, G06K 9/32, G08B 13/196, H04M 1/02, H04M 11/02

(54) **Videosprechanlage mit einer Außenstation, welche Personen mittels einer Kamera erfasst**
Video intercom with an external station that records people using a camera
Installation de visiophone dotée d'une station extérieure détectant des personnes à l'aide d'une caméra

(30) Priorität: 27.08.2008 DE 102008039977
(43) Veröffentlichungstag der Anmeldung: 03.03.2010
(73) Patentinhaber: ABB AG, 68309 Mannheim (DE)
(72) Erfinder: Schallenberg, Wolfgang, 40599 Düsseldorf (DE); Wieske, Stefan, 58285 Gevelsberg (DE); Zapp, Robert, 58579 Schalksmühle (DE)

(56) Entgegenhaltungen:
- EP-A- 0 591 585
- WO-A-2007/011207
- WO-A-2007/139658
- DE-B3-102006 033 133
- GB-A- 2 319 712
- US-A- 5 428 388

## Beschreibung

Die Erfindung bezieht sich auf eine Videotürsprechanlage mit einer Außenstation, welche Personen mittels einer Kamera erfasst, gemäß dem Oberbegriff des Anspruchs 1.

Aus der DE 10 2006 033 133 B3 ist eine Einrichtung zur Erfassung von Personen mittels einer Kamera bekannt, insbesondere Videotürsprechanlage, wobei die Wärmestrahlung innerhalb des Gesamt-Erfassungsbereiches der Kamera über mehrere als Thermokette oder Thermosäule oder Thermopile-Zeile oder Thermosensorarray oder Thermopile-Array ausgeführte Temperatursensoren detektiert wird und wobei aus dem Gesamt-Erfassungsbereich der Kamera ein begrenzter "gezoomter" Bildausschnitt abgeleitet wird, welcher dem Bereich der von den Temperatursensoren detektierten maximalen Wärmestrahlung folgt. Vorteilhaft zeigt das Gerät zur Betrachtung des Kamerabildes, insbesondere der Monitor einer Wohnungsstation (Innenstation) nicht mehr das Gesamtbild, d. h. den gesamten Erfassungsbereich der Kamera, sondern nur noch den im Vergleich zum Gesamtbild vergrößerten Bildausschnitt, vorzugsweise mit dem Gesicht der zu erfassenden Person, d. h. den Bereich der maximalen Wärmestrahlung vor der Kamera. Hierdurch wird eine einwandfreie Identifizierung von Personen erleichtert.

Der Erfindung liegt die Aufgabe zugrunde, eine optimierte Videotürsprechanlage mit einer Außenstation, welche Personen mittels einer Kamera erfasst, anzugeben.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass mit einer einzigen Einrichtung und ohne jedes Zusatzmodul oder Zusatzgerät zusätzlich sowohl eine Ansteuerung einer netzgespeisten Beleuchtung zur Beleuchtung des Umgebungsbereichs um die Außenstation als auch eine Personenbeleuchtung zur Beleuchtung des Gesichts der Person vor der Kamera erfolgt, sobald sich eine Person dem Eingangsbereich (Hauseingang) nähert. Die Temperatursensorzeile oder Temperatursensormatrix wird also nicht nur zur Optimierung des zu übertragenden Bildausschnittes genutzt, sondern es wird ein Sensorsignal für Beleuchtungs-Schaltfunktionen abgezweigt. Vorteilhaft ist ein separates Bewegungsmeldermodul entbehrlich. Vorteilhaft entfällt eine zusätzliche Verkabelung eines solchen Zusatzgeräts. Der Vorteil der Nutzung der Temperatursensoren der Temperatursensorzeile oder Temperatursensormatrix für Beleuchtungs-Schaltfunktionen gegenüber einem Bewegungsmelder besteht darin, dass für die kontinuierliche Erfassung der Person vor der Tür keine Bewegung der Person erforderlich ist, da der Temperatursensor auf den detektierten Temperaturunterschied reagiert.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1: ein Ausführungsbeispiel zur elektrischen Verschaltung der wesentlichen Komponenten einer Videotürsprechanlage,
- Fig. 2: eine Ausführungsform einer Außenstation der Videotürsprechanlage,
- Fig. 3: den Gesamt-Erfassungsbereich der Kamera mit "gezoomtem" Bildausschnitt.

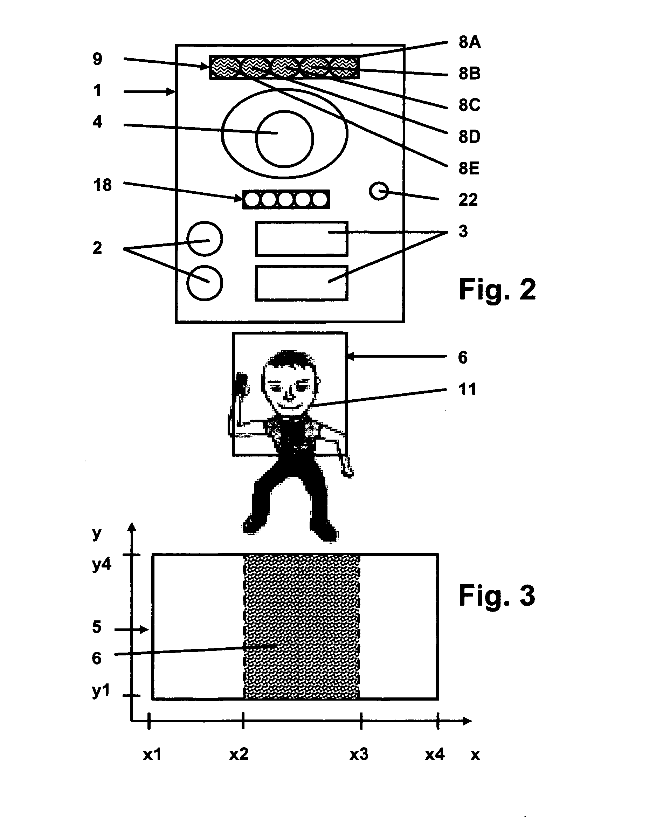

In Fig. 2 ist eine Ausführungsform einer Außenstation 1 der Videotürsprechanlage dargestellt. Die Außenstation 1 der Türsprechanlage weist auf:
- Mindestens eine Türklingel 2,
- Mindestens ein Namensschild 3 hierzu,
- eine Kamera 4
- eine z. B. oberhalb der Kamera 4 angeordnete Temperatursensorzeile 9 (Thermokette, Thermosäule, Thermopile-Zeile) oder Temperatursensormatrix (Temperatursensorarray, Thermopile-Array), bestehend aus mehreren, z. B. fünf Temperatursensoren 8A, 8B, 8C, 8D, 8E (Temperaturmesspunkten),
- eine Personenbeleuchtung 18 zur Beleuchtung des Gesichts der Person vor der Kamera 4, z. B. bestehend aus mehreren LEDs, ggf. Infrarot-LEDs,
- einen Dämmerungssensor 22.

In Fig. 3 ist der Gesamt-Erfassungsbereich der Kamera mit "gezoomtem" Bildausschnitt dargestellt. Es ist ein x/y-Koordinatensystem zur Darstellung des Gesamt-Erfassungsbereiches 5 mit seiner Breite x (horizontale Achse) und seiner Höhe y (vertikale Achse) gezeigt:
- Für den Gesamt-Erfassungsbereich 5 der Kamera gilt: x1 < x < x4 und y1 <y<y4.
- Für den begrenzten Bildausschnitt 6 gilt: x2 < x < x3 und y1 < y < y4.

Zur Bildung der x-abhängigen Thermospannung werden die Sensorsignale der einzelnen, den Gesamt-Erfassungsbereich 5 detektierenden Temperaturmesspunkte 8A, 8B, 8C, 8D, 8E ausgewertet, wobei der relevante (begrenzte) Bildausschnitt durch die maximale Thermospannung festgelegt wird. Wie durch die unter Fig. 2 skizzierte Position einer Person 11 im Zusammenhang mit Fig. 3 zum Ausdruck gebracht wird, tritt beim betrachteten Ausführungsbeispiel lediglich im begrenzten Bildausschnitt 6 zwischen x2 und x3 detektierbare Wärmestrahlung auf, so dass die Thermospannung zwischen diesen beiden x-Koordinaten ihr Maximum aufweist. Dementsprechend wird der gezeigte begrenzte Bildausschnitt 6 aus dem gesamten Gesamt-Erfassungsbereich 5 ausgewählt.

Bei Verwendung einer Temperatursensormatrix an Stelle einer Temperatursensorzeile ist es möglich, die Thermospannung nicht nur längs der x-Achse, sondern auch längs der y-Achse zu detektieren, um exakt denjenigen begrenzten Bildausschnitt 6 innerhalb des Gesamt-Erfassungsbereiches 5 der Kamera 4 zu bestimmen, welcher das Gesicht einer zu erfassenden Person 11 zeigt. In gleicher Funktion ist auch der Einsatz der Kombination einer vertikal und einer horizontal eingesetzten Temperatursensorzeile möglich.

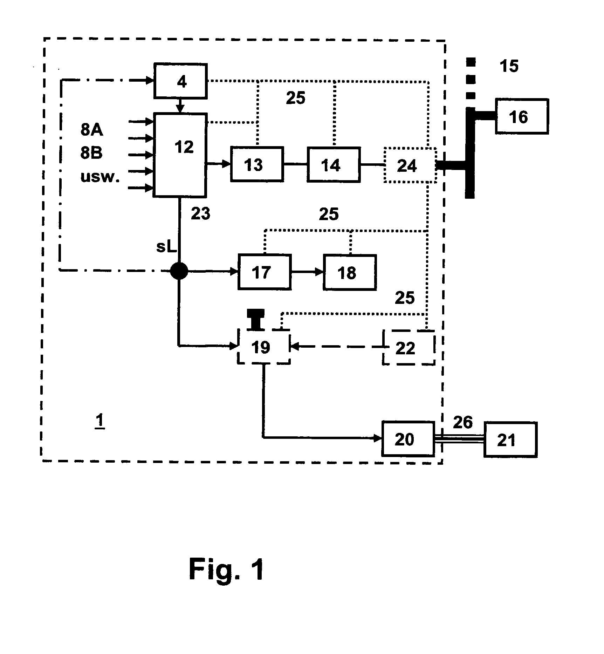

In Fig. 1 ist ein Ausführungsbeispiel zur elektrischen Verschaltung der wesentlichen Komponenten einer Videotürsprechanlage dargestellt. Die Außenstation 1 weist eine Verarbeitungs- und Steuereinrichtung 12 auf, welche eingangsseitig die Bildsignale der Kamera 4 und die Sensorsignale aller Temperaturmesspunkte 8A, 8B, 8C.... empfängt, hieraus die Thermospannungsverteilung innerhalb des Gesamt-Erfassungsbereiches 5 berechnet und nachfolgend denjenigen begrenzten Bildausschnitt 6 bestimmt, welcher den Bereich der maximalen Wärmestrahlung vor der Kamera repräsentiert. Die von der Kamera 4 erzeugten Bildsignale dieses begrenzten Bildausschnitts 6 werden einer Bildverarbeitungseinrichtung 13 zugeführt, die ausgangsseitig mit einem Buskoppler 14 verbunden ist, welcher an einen Bus (z. B. der Gebäudesystemtechnik) 15 angeschlossen ist. Mittels eines Monitors 16 einer Wohnungsstation kann nunmehr der begrenzte Bildausschnitt 6 dargestellt werden.

Ein ODER-Ausgang 23 der Verarbeitungs- und Steuereinrichtung 12 gibt ein Sensorsignal sL ab, sobald ein Temperatursensor (Temperarturmesspunkt) 8A, 8B, 8C ... eine signifikante Wärmerhöhung vor der Außenstation 1 detektiert. Eine signifikante Wärmeerhöhung bedeutet in diesem Zusammenhang, dass die Wärmeerhöhung hinsichtlich ihrer Intensität typisch für eine sich der Außenstation 1 nähernde Person ist.

Dieses Sensorsignal sL wird einerseits einer Schaltstufe 17 (z. B. mit einem Transistor gebildet) zur Ansteuerung der Personenbeleuchtung 18 zugeleitet. Vorzugsweise ist die Personen beleuchtung 18 durch mehrere LEDs ausgeführt, wie vorstehend bereits erwähnt. Bei Einsatz von Infrarot-LEDs wird jede Blendung der vor der Außenstation 1 stehenden Person verhindert, selbstverständlich ist die Kamera 4 für einen solchen Fall entsprechend Infrarot-sensibel auszuführen.

Das Sensorssignal sL wird andererseits einer Schaltschwelle 19 zugeführt, welche eine Einstellvorrichtung zur Sollwertvorgabe von Umgebungslicht aufweist. Der Dämmerungssensor (z. B. Fotowiderstand) 22 liefert der Schaltschwelle 19 ein dem aktuellen Wert des Umgebungslichts entsprechendes Signal. Ausgangsseitig steuert die Schaltschwelle 19 eine Schaltstufe (Laststufe mit Relais oder Halbleiterschalter) 20 an, sobald das mittels des Dämmerungssensors 22 detektierte Umgebungslicht geringer als der durch die Sollwertvorgabe der Schaltschwelle 19 vorgegebene Wert ist. Über die angesteuerte / durchgeschaltete Schaltstufe 20 wird eine netzgespeiste Beleuchtung (230 V-Beleuchtung) 21 zur Beleuchtung des Umgebungsbereichs um die Außenstation 1 der Videotürsprechanlage versorgt.

Das Ausschalten der Personenbeleuchtung 18 und der netzgespeisten Beleuchtung 21 erfolgt, sobald von den Temperatursensoren 8A, 8B, 8C.... keine durch eine Person hervorgerufene Wärme vor der Außenstation 1 mehr detektiert wird, wobei selbstverständlich eine Ausschaltverzögerung vorgegeben werden kann.

Die Konfiguration mit Schaltschwelle 19 / Dämmerungssensor 22 ist lediglich optional, d. h. bei einer vereinfachten Ausführungsform der Außenstation 1 ohne Schaltschwelle 19 / Dämmerungssensor 22 wird das Sensorsignal sL direkt der Schaltstufe 20 zugeleitet, d. h. die netzgespeiste Beleuchtung 21 wird in einem solchen Fall nicht erst bei Dämmerung oder bei Nacht, sondern stets bei Auftreten des Sensorsignals sL zugeschaltet.

In Weiterbildung der Erfindung kann das Sensorsignal sL am ODER-Ausgang 23 der Verarbeitungs- und Steuereinrichtung 12 herangezogen werden, die Kamera 4 einzuschalten. Ferner kann durch das Sensorssignal sL der Aufbau der Kommunikation einschließlich Signalisierung (Türklingel) der Videotürsprechanlage eines Einfamilienhauses gestartet werden. Dies hat den Vorteil, dass am Monitor 16 der Wohnungsstation Personen beobachtet werden können, bevor sie die Türklingel 2 betätigen oder ohne dass sie die Türklingel 2 betätigen.

Die Energieversorgung der Türstation 1 erfolgt vorzugsweise aus dem Bus 15 respektive bei Nutzung von Ethernet vorzugsweise über "Power over Ethernet". In einem solchen Fall ist ein Trenn-Baustein 24 für Daten und Energie zwischen Buskoppler 14 und Bus 15 eingefügt, welcher über Energieversorgungsleitungen 25 die Kamera 4, die Verarbeitungs- und Steuereinrichtung 12, die Bildverarbeitungseinrichtung 13, den Buskoppler 14, die Schaltstufe 17, die Personenbeleuchtung 18, die Schaltschwelle 19 und den Dämmerungssensor 22 speist.

Für den Schaltausgang 26 der Schaltstufe 20 zum Anschluss der netzgespeisten Beleuchtung 21 ist ein potentialfreier, vom Bus 15 entsprechend getrennter Schaltkontakt vorgesehen.

### Bezugszeichenliste:

- 1: Außenstation einer Videotürsprechanlage
- 2: Türklingel
- 3: Namensschild
- 4: Kamera
- 5: Gesamt-Erfassungsbereich
- 6: begrenzter Bildausschnitt
- 7: ---
- 8: 8A, 8B, 8C, 8D, 8E... Temperatursensoren (Temperaturmesspunkte)
- 9: Temperatursensorzeile oder Temperatursensormatrix
- 10: ---
- 11: Person
- 12: Verarbeitungs- und Steuereinrichtung
- 13: Bildverarbeitungseinrichtung
- 14: Buskoppler
- 15: Bus
- 16: Monitor einer Wohnungsstation
- 17: Schaltstufe (z. B. Transistor) zur Ansteuerung der Personenbeleuchtung
- 18: Personenbeleuchtung (z. B. mehrere LEDs)
- 19: Schaltschwelle für Umgebungslicht mit Einstelleinrichtung für Sollwertvorgabe
- 20: Schaltstufe (Laststufe mit z. B. Relais)
- 21: Netzgespeiste Beleuchtung (230 V-Beleuchtung)
- 22: Dämmerungssensor (z. B. Fotowiderstand) zur Messung des Umgebungslichts
- 23: ODER-Ausgang
- 24: Trenn-Baustein für Daten und Energie
- 25: Energieversorgungsleitungen
- 26: Schaltausgang
- x: horizontale Achse = Breite
- x1...: Koordinaten auf der horizontalen Achse
- y: vertikale Achse = Höhe
- y1...: Koordinaten auf der vertikalen Achse
- sL: Sensorsignal der Verarbeitungs- und Steuereinrichtung

## Patentansprüche

1. Videotürsprechanlage mit einer Außenstation (1), welche Personen mittels einer Kamera (4) erfasst, und mindestens einer mit der Außenstation (1) in Wirkverbindung stehenden Wohnungsstation, wobei die Wärmestrahlung innerhalb des Gesamt-Erfassungsbereiches (5) der Kamera (4) über mehrere als Thermokette oder Thermosäule oder Thermopile-Zeile oder Thermosensorarray oder Thermopile-Array ausgeführte Temperatursensoren (8A, 8B, 8C...) detektiert wird und wobei unter Einsatz einer Signale der Temperatursensoren (8A, 8B, 8C...) empfangenden Verarbeitungs- und Steuereinrichtung (12) der Außenstation (1) aus dem Gesamt-Erfassungsbereich (5) der Kamera (4) ein begrenzter "gezoomter" Bildausschnitt (6) abgeleitet wird, welcher dem Bereich der von den Temperatursensoren (8A, 8B, 8C...) detektierten maximalen Wärmestrahlung folgt, **dadurch gekennzeichnet**
• **dass** die Verarbeitungs- und Steuereinrichtung (12) ein Sensorsignal (sL) zum Einschalten einer Beleuchtung (18, 21) erzeugt, sobald von mindestens einem Temperatursensor (8A, 8B, 8C...) eine Wärmeerhöhung, welche hinsichtlich ihrer Intensität typisch für eine sich der Außenstation nähernde Person ist, vor der Außenstation (1) detektiert wird,
• **dass** das Sensorsignal (sL) über eine Schaltstufe (17) zur Ansteuerung/Einschaltung einer in der Außenstation (1) integrierten Personenbeleuchtung (18) zur Beleuchtung des Gesichts der Person vor der Kamera (18) zugeleitet wird,
• **dass** das Sensorssignal (sL) einer Schaltschwelle 19 zugeführt wird, welche eine Einstellvorrichtung zur Sollwertvorgabe von Umgebungslicht aufweist, wobei die Schaltschwelle (19) ausgangsseitig eine Schaltstufe (20) ansteuert, und über die angesteuerte / durchgeschaltete Schaltstufe (20) eine netzgespeiste Beleuchtung (21) zur Beleuchtung des Umgebungsbereichs um die Außenstation (1) der Videotürsprechanlage versorgt,
• **dass** die Personenbeleuchtung (18) durch mehrere LEDs gebildet ist,
• **dass** das Sensorsignal (sL) über die Schaltstufe (20) eine externe, netzgespeiste Beleuchtung (21) einschaltet,
• **dass** das Sensorsignal (sL) zum Einschalten der Kamera (4) herangezogen wird,
• **dass** das Sensorsignal (sL) zum Starten des Aufbaus der Kommunikation zwischen Türstation (1) und Wohnungsstation herangezogen wird,
• **dass** die Energieversorgung der Türstation (1) über einen zwischen der Außenstation (1) und der mindestens einen Wohnungsstation vorgesehenen Bus (15) erfolgt, und
• **dass** das Ausschalten der Personenbeleuchtung (18) und der netzgespeisten Beleuchtung (21) erfolgt, sobald von den Temperatursensoren (8A, 8B, 8C....) keine durch eine Person hervorgerufene Wärme vor der Außenstation (1) mehr detektiert wird.

2. Videotürsprechanlage nach Anspruch 1, **dadurch gekennzeichnet, dass** die LEDs der Personenbeleuchtung (18) in Form von Infrarot-LEDs ausgeführt sind.

3. Videotürsprechanlage nach Anspruch 1, **dadurch gekennzeichnet, dass** der Schaltstufe (20) eine mittels eines Dämmerungssensors (22) beaufschlagte Schaltschwelle (19) vorgeschaltet ist.

4. Videotürsprechanlage nach Anspruch 1, dass die Außenstation (1) bei Verwendung von "Power over Ethernet" einen Trenn-Baustein (24) für Daten und Energie aufweist.

5. Videotürsprechanlage nach einem der vorstehenden Ansprüche, **dadurch gekennzeichnet, dass** mehrere Temperatursensoren (8A, 8B, 8C...) in Form mindestens einer Zeile angeordnet sind.

6. Videotürsprechanlage nach einem der Ansprüche 1 - 4, **dadurch gekennzeichnet, dass** mehrere Temperatursensoren (8A, 8B, 8C...) in Form einer Matrix angeordnet sind.

7. Videotürsprechanlage nach einem der Ansprüche 1 - 4, **dadurch gekennzeichnet, dass** die Temperatursensoren (8A, 8B, 8C...) in Form einer horizontal und einer vertikal angeordneten Zeile kombiniert sind.

## Claims

1. Video door intercom system having an external station (1), which records people using a camera (4), and at least one home station which is operatively connected to the external station (1), the thermal radiation inside the overall recording range (5) of the camera (4) being detected using a plurality of temperature sensors (8A, 8B, 8C...) in the form of a thermocouple pile or a thermopile or a thermopile row or a thermosensor array or a thermopile array, and a limited "zoomed" image section (6) being derived from the overall recording range (5) of the camera (4) using a processing and control device (12) which receives signals from the temperature sensors (8A, 8B, 8C...) in the external station (1), which image section follows the region of the maximum thermal radiation detected by the temperature sensors (8A, 8B, 8C...), **characterized**
• **in that** the processing and control device (12) generates a sensor signal (sL) for switching on an illumination means (18, 21) as soon as at least one temperature sensor (8A, 8B, 8C...) detects an increase in heat, which, in terms of its intensity, is typical of a person approaching the external station, in front of the external station (1),
• **in that** the sensor signal (sL) is forwarded via a switching stage (17) for controlling/switching on a person illumination means (18) which is integrated in the external station (1) and is intended to illuminate the face of the person in front of the camera (18),
• **in that** the sensor signal (sL) is supplied to a switching threshold (19) which has an adjusting apparatus for predefining the desired value of ambient light, the switching threshold (19) controlling a switching stage (20) on the output side and supplying a mains-operated illumination means (21) for illuminating the area surrounding the external station (1) of the video door intercom system via the controlled/switched-on switching stage (20),
• **in that** the person illumination means (18) is formed by a plurality of LEDs,
• **in that** the sensor signal (sL) switches on an external mains-operated illumination means (21) via the switching stage (20),
• **in that** the sensor signal (sL) is used to switch on the camera (4),
• **in that** the sensor signal (sL) is used to start the setting-up of communication between the door station (1) and the home station,
• **in that** the door station (1) is supplied with energy via a bus (15) provided between the external station (1) and the at least one home station, and
• **in that** the person illumination means (18) and the mains-operated illumination means (21) are switched off as soon as the temperature sensors (8A, 8B, 8C...) no longer detect any heat caused by a person in front of the external station (1).

2. Video door intercom system according to Claim 1, **characterized in that** the LEDs of the person illumination means (18) are in the form of infrared LEDs.

3. Video door intercom system according to Claim 1, **characterized in that** a switching threshold (19) which is acted on using a twilight sensor (22) is connected upstream of the switching stage (20).

4. Video door intercom system according to Claim 1, **characterized in that** the external station (1) has an isolating module (24) for data and energy when "power over Ethernet" is used.

5. Video door intercom system according to one of the preceding claims, **characterized in that** a plurality of temperature sensors (8A, 8B, 8C...) are arranged in the form of at least one row.

6. Video door intercom system according to one of Claims 1-4, **characterized in that** a plurality of temperature sensors (8A, 8B, 8C...) are arranged in the form of a matrix.

7. Video door intercom system according to one of Claims 1-4, **characterized in that** the temperature sensors (8A, 8B, 8C...) are combined in the form of a horizontally and a vertically arranged row.

## Revendications

1. Installation d'interphone-portier vidéo comportant une station extérieure (1) qui détecte des personnes au moyen d'une caméra (4) et au moins une station d'habitation en liaison fonctionnelle avec la station extérieure (1), dans laquelle le rayonnement thermique produit à l'intérieur de l'ensemble de la zone de détection (5) de la caméra (4) est détecté par l'intermédiaire d'une pluralité de capteurs de température (8A, 8B, 8C...) réalisés sous forme de chaîne de thermocouples ou de borne de thermocouple ou d'une ligne de thermopiles ou d'un réseau de capteurs thermiques ou d'un réseau de thermopiles et dans lequel, au moyen d'un dispositif de traitement et de commande (12) de la station extérieure (1) recevant des signaux des capteurs de température (8A, 8B, 8C...), un fragment d'image "zoomé" délimité (6) est déterminée à partir de l'ensemble de la zone de détection (5) de la caméra (4), lequel fragment d'image suit la zone du rayonnement thermique maximal détecté par les capteurs de température (8A, 8B, 8C...), **caractérisé**
- **en ce que** le dispositif de traitement et de commande (12) génère un signal de capteur (sL) destiné à activer un éclairage (18, 21) dès qu'une augmentation de chaleur dont l'intensité est typique d'une personne se rapprochant de la station extérieure devant la station extérieure (1) est détectée par au moins un capteur de température (8A, 8B, 8C...),
- **en ce que** le signal de capteur (sL) est acheminé par l'intermédiaire d'un étage de commutation (17) pour la commande/activation d'un éclairage de personnes (18) intégré à la station extérieure (1) afin d'éclairer le visage de la personne se trouvant devant la caméra (18),
- **en ce que** le signal de capteur (sL) est appliqué à un seuil automatique (19) qui comporte un dispositif de réglage d'une valeur de consigne de la lumière ambiante, dans lequel le seuil automatique (19) commande du côté de la sortie un étage de commutation (20), et, par l'intermédiaire de l'étage de commutation (20) commandé/rendu passant, alimente un éclairage (21) alimenté sur secteur pour éclairer la zone environnante de la station extérieure (1) de l'installation d'interphone-portier vidéo,
- **en ce que** l'éclairage de personnes (18) est constitué d'une pluralité de LED,
- **en ce que** le signal de capteur (sL) active un éclairage (21) externe alimenté sur secteur par l'intermédiaire de l'étage de commutation (20),
- **en ce que** le signal de capteur (sL) est utilisé pour activer la caméra (4),
- **en ce que** le signal de capteur (sL) est utilisé pour lancer l'établissement de la communication entre la station de porte (1) et la station d'habitation,
- **en ce que** l'alimentation en énergie de la station de porte (1) est effectuée par l'intermédiaire d'un bus (15) prévu entre la station extérieure (1) et l'au moins une station d'habitation, et
- **en ce que** la désactivation de l'éclairage de personnes (18) et de l'éclairage alimenté sur secteur (21) est effectué dès que la chaleur dégagée par une personne devant la station extérieure (1) n'est plus détectée par les capteurs de température (8A, 8B, 8C...).

2. Installation d'interphone-portier vidéo selon la revendication 1, **caractérisée en ce que** les LED de l'éclairage de personnes (18) sont réalisées sous la forme de LED infrarouges.

3. Installation d'interphone-portier vidéo selon la revendication 1, **caractérisée en ce que** l'étage de commutation (20) est connecté en amont d'un seuil automatique (19) attaqué au moyen d'un capteur d'obscurcissement (22).

4. Installation d'interphone-portier vidéo selon la revendication 1, **caractérisée en ce que** la station extérieure (1), lors de l'utilisation d'une "alimentation sur Ethernet", comporte un composant séparateur (24) pour les données et l'énergie.

5. Installation d'interphone-portier vidéo selon l'une quelconque des revendications précédentes, **caractérisée en ce qu'**une pluralité de capteurs de température (8A, 8B, 8C...) sont agencés sous la forme d'au moins une ligne.

6. Installation d'interphone-portier vidéo selon l'une quelconque des revendications 1 - 4, **caractérisée en ce qu'**une pluralité de capteurs de température (8A, 8B, 8C...) sont agencés sous la forme d'une matrice.

7. Installation d'interphone-portier vidéo selon l'une quelconque des revendications 1 - 4, **caractérisée en ce que** les capteurs de température (8A, 8B, 8C...) sont combinés sous la forme d'une ligne agencée horizontalement et d'une ligne agencée verticalement.
